# EUROPÄISCHE PATENTSCHRIFT

(11) **EP 2 130 742 B1**
(45) Veröffentlichungstag und Bekanntmachung des Hinweises auf die Patenterteilung: **16.07.2014**
(21) Anmeldenummer: 08010315.3
(22) Anmeldetag: 06.06.2008
(51) Int. Cl.: B62D 5/00, B62D 5/04

(54) **Überlagerungslenkung mit Bremseinrichtung**
Superimposed steering with braking mechanism
Direction à superposition dotée d'un dispositif de freinage

(43) Veröffentlichungstag der Anmeldung: 09.12.2009
(73) Patentinhaber: ThyssenKrupp Presta Aktiengesellschaft, 9492 Eschen (LI)
(72) Erfinder: Galehr, Robert, 9493 Mauren (LI); Klaey, Michael, 8757 Filzbach (CH)
(74) Vertreter: Lenzing, Andreas

(56) Entgegenhaltungen:
- WO-A-2006/072186
- DE-A1- 19 906 703
- DE-A1-102005 005 427

## Beschreibung

Die Erfindung bezieht sich auf eine Drehzahlüberlagerungseinrichtung eines Kraftfahrzeuglenksystems nach dem Oberbegriff des Anspruchs 1 sowie ein Verfahren zum Betreiben einer Drehzahlüberlagerungseinrichtung entsprechend Anspruch 9.

Derartige Kraftfahrzeuglenkungen mit Überlagerungsgetriebe werden bei modernen Lenksystemen für nicht spurgebundene Kraftfahrzeuge verwendet. Der elektromagnetische Hilfsantrieb, der bei derartigen Überlagerungsgetrieben vorgesehen ist, dient dazu, die durch den Hilfsantrieb hervorgerufenen Drehungen des Überlagerungsgetriebes den durch die Bedienperson am Steuerrad (Lenkrad) vorgenommenen Steuereingriffen zu überlagern. Auf diese Weise wird die Relation der Verdrehgeschwindigkeit der Fahrzeugräder im Vergleich zur Verdrehgeschwindigkeit des Steuerrades einstellbar und kann der jeweiligen Fahrsituation angepasst werden. So sollen beispielsweise beim Einparken bereits geringe Winkeländerungen am Steuerrad zu großen Winkelverschwenkungen an den Rädern führen, während bei schneller Autobahnfahrt selbst größere Winkeländerungen am Steuerrad nur zu geringen Winkelverschwenkungen an den Rädern führen sollen. Unter Umständen soll sogar ein automatisiertes Einparken ohne Verdrehung des Steuerrades ermöglicht werden. Gleichzeitig kann auf diese Weise über den Hilfsantrieb z.B. korrigierend auf fehlerhafte oder zu heftige Lenkbewegungen des Fahrzeugführers eingewirkt werden. Solche korrekturbedürftigen Lenkbewegungen können beispielsweise bei Überreaktionen des Fahrers in Gefahrsituätionen auftreten.

Die Funktion einer Drehzahlüberlagerung, die auch als Drehwinkelüberlagerung bezeichnet werden kann, beim Lenkvorgang ist somit gegenüber einer Krafteinkopplung bzw. Drehmomenteneinkopplung, wie sie bei einer Servolenkung zur Erleichterung des Steuervorgangs dient, entkoppelt.

Im Stand der Technik sind bereits verschiedene derartige Einrichtungen bekannt geworden. Neben der Anwendung von Planetengetrieben zur Überlagerung der Drehwinkel bzw. der Drehzahl werden auch Spannungswellengetriebe, die auch unter dem Begriff Harmonic-Drive-Getriebe oder Pulsatorengetriebe bekannt sind, verwendet.

Bei derartigen Getrieben zur Überlagerung der Drehwinkel bzw. Drehzahl sind die Antriebswelle und die Abtriebswelle sowie eine Ausgangswelle eines Hilfsantriebes jeweils mit einem Getriebeglied des Überlagerungsgetriebes verbunden. Derartige Getriebeglieder sind beispielsweise jeweils ein Zahnrad oder ein Planetenträger. Die Überlagerung erfolgt durch jeweils spezifische Getriebestrukturen, teilweise aus weiteren Getriebeelementen bestehend, indem sich die Drehzahlen der Ausgangswelle des Hilfsantriebes und der Antriebswelle mit entsprechend vorbestimmten Drehzahlübersetzungen addieren und auf die Abtriebswelle der Einrichtung übertragen werden. Neben den Drehzahlen werden entsprechend auch Drehmomente übertragen. Eine entsprechende Abstützung der Momente am Hilfsantrieb, und an der Antriebs- und Abtriebswelle ist daher erforderlich, da andernfalls die Drehzahl der Antriebswelle nicht wie gewünscht auf die Abtriebswelle sondern auf die Ausgangswelle des Hilfsantriebes übertragen wird. Im Falle einer Drehzahlüberlagerungseinrichtung für ein Kraftfahrzeug hätte das zur Folge, dass der Fahrer den Lenkeinschlag nicht mehr sicher bestimmen kann. Der Verriegelungseinrichtung zur wahlweisen drehfesten Kopplung zwischen Antriebswelle und Abtriebswelle kommt eine entsprechend hohe Bedeutung zu.

In der EP1338493A1 und der JP2003306155A werden eine Einrichtung zur Drehzahlüberlagerung für ein Lenksystem vorgestellt, bei denen mit einem Spannungswellengetriebe die Drehzahlüberlagerung erfolgt. Dabei ist die Einrichtung mit der vom Steuerrad angetriebenen Lenkwelle integral und drehbar ausgebildet und enthält einen Antriebsmotor, dessen Antriebsdrehzahl zwecks Erreichung der gewünschten Drehzahlüberlagerung einstellbar ist. Bei der vorgestellten Lösung ist das Gehäuse mit der Lenkwelle verbunden und dreht somit mit. Zur mechanischen Zwangskopplung der Eingangs- mit der Ausgangswelle der Überlagerungseinrichtung im Fehlerfall, etwa bei Stromausfall, wird ein Formschluss analog einer Kupplungsverzahnung vorgeschlagen, die durch eine Axialbewegung der gegenüberliegenden Kupplungsseiten mit Federkraft eingekoppelt ist. Die Kupplung wird durch die am Getriebe angreifenden Momente von der mit dem Steuerrad verbundenen Antriebswelle bzw. der mit den Rädern verbundenen Abtriebswelle gesteuert.

Ein wichtiger Nachteil dieser Lösung besteht darin, dass der Fahrer die gesamte Einrichtung, einschliesslich einer Sicherheitskupplung, beim Steuern des Fahrzeuges mit dem Steuerrad drehen muss.

Weiter wird in der DE19823031A1 eine Drehzahlüberlagerungseinrichtung mit einer Sicherheitskupplung für die sichere Drehmomentenübertragung im Fehlerfall vorgestellt. In den verschiedenen Ausführungsbeispielen wird ein Stift durch einen Solenoid im Fehlerfall parallel zur Achse der Antriebs- bzw. Abtriebswelle bewegt und das Getriebe blockiert. In einem Ausführungsbeispiel sind eine Reihe von Zapfenlöchern zur Aufnahme des Stiftes in einem geeigneten Getriebeglied vorgesehen. In einem weiteren Ausführungsbeispiel, bei dem die Überlagerung mit einem Harmonic-Drive-Getriebe realisiert ist, wird der Stift zwischen dem elliptischen Rotor und Teilen des Gehäuses oder alternativ zwischen die Verzahnungen des Getriebes in Eingriff gebracht.

Zum Betreiben derartiger Einrichtungen ist es sinnvoll oder sogar notwendig, die Sicherheitskupplung beim Start des Fahrzeuges zunächst im eingekoppelten Zustand zu halten, da in der Regel nicht sichergestellt sein kann, dass sofort ausreichend Energie zum Betreiben der Drehzahlüberlagerungseinrichtung zur Verfügung steht.

In der WO 2007/038884 wird eine weitere Drehzahlüberlagerungseinrichtung für ein Lenksystem mit einer Sicherheitskupplung beschrieben. Die Drehzahlüberlagerungseinrichtung umfasst eine Abtriebswelle und eine Antriebswelle, welche an einer karosseriefesten Trägeranordnung mindesten teilweise drehbar gelagert sind, einen Hilfsantrieb mit einem koaxial zu einer der Wellen angeordneten Rotor, der mit einem ersten Getriebeelement drehfest verbunden ist und eine Verriegelungseinrichtung zur wahlweisen drehfesten Kopplung der Wellen, wobei das erste Getriebeelement die Drehzahl des Rotors auf die Drehzahl der Abtriebswelle überträgt. Der Rotor ist mit einem ferromagnetischen oder permanentmagnetischen ersten Kontaktelement drehfest verbunden, wobei die drehfeste Kopplung der Wellen durch einen Reibschluss des ersten Kontaktelementes mit einem zweiten Kontaktelement, das drehfest mit der Trägeranordnung verbunden ist, erzielt wird. Die Anpresskraft wird magnetisch erzeugt und zumindest eines der beiden Kontaktelemente ist in Achsrichtung verschieblich angeordnet zur Erstellung der Kopplung der Wellen. Kontaktelemte sind hierbei als stabile Bauteile ausgebildet und werden bevorzugt als Kupplungsscheiben ausgebildet.
Nachteil dieser vorgestellten technischen Lösung ist die aufwändige drehfeste Verbindung zwischen dem einen Kontaktelement und dem Rotor, bei der einerseits ein möglichst klapperfreies Übertragen der Drehung und andererseits ein möglichst leichtgängiges axiales Verschieben zum Öffnen und Schliessen der Bremse bzw. Kupplung ermöglicht sein muss.

Die gleiche Kupplungsanordnung ist auch in der WO 2006/072186 A1 dargestellt, wie dies bereits zur WO 2007/038884 des gleichen Anmelders beschrieben worden ist.

In einer weiteren Schrift, der DE 10 2005 005427 A1 wird eine Fahrzeuglenkung mit einer Kupplungsanordnung beschrieben bei welcher ein Rotor innerhalb des Stators des Stellantriebes in Längsrichtung, axial verschieblich, drehbar gelagert angeordnet ist. Für den Kupplungsfall wird der Rotor über die Verschiebung mit dem Stator drehfest, formschlüssig oder kraftschlüssig über Kupplungsscheiben, die am Stator und am Rotor angebracht sind, in Kontakt gebracht. Beim Normalbetrieb ist der Stellantrieb in Betrieb und die Magnetkraft der Statorspule bewegt den Rotor in axialer Richtung um einige Millimeter wodurch die Kupplungsscheiben getrennt sind. Im Störungsfall wenn der Motor nicht bestromt ist, ist kein Magnetfeld vorhanden und eine Feder presst Die Kupplung zusammen durch Bewegung des Rotors in axialer Richtung. Bei bestromtem Stellantrieb wird somit der Rotor durch seine Magnetkraft gegen die Federkraft wirkend in gelöster Stellung in axialer Richtung verschoben gehalten.

Die im Stand der Technik gezeigten Lösungen bergen jedoch eine Reihe von Nachteilen. Die Blockierelemente der Sicherheitskupplung müssen den allfällig sich drehenden Rotor des Elektromotors schlagartig abbremsen und dabei erhebliche Kräfte übertragen, so das ein häufiges Ein- und Auskuppeln der Kupplung zu Verschleiss führt oder die Kupplung aufwändig und mit grossem Bauraumbedarf ausgelegt sein muss. Weiter sind die Steifigkeiten in der Drehmomentenübertragung nicht sehr hoch. Zudem ist ein Einkuppeln nicht in jeder Winkelposition möglich.

Es ist die Aufgabe der Erfindung, eine Drehzahlüberlagerungslenkung für ein Lenksystem mit einer Sicherheitskupplung bereitzustellen, die kompakt ist und geringen Verschleiss aufweist und in jeder Winkelposition ein- und ausgekuppelt werden kann und die einfach und wirtschaftlich hergestellt werden kann.

Gelöst wird die Aufgabe durch die Vorrichtung entsprechend den Merkmalen des Anspruchs 1 und einem Verfahren entsprechend den Merkmalen des Anspruchs 9. Die abhängigen Ansprüche definieren weitere bevorzugte Ausführungsformen.

Die Erfindung wird nun nachfolgend beispielsweise und mit schematischen Figuren näher erläutert. Es zeigen:
- Fig. 1: eine Drehzahlüberlagerungseinrichtung mit koaxial angeordnetem Motorantrieb kombiniert mit einer Sicherheitskupplung gemäss der Erfindung im Längsschnitt,
- Fig.2a: ein vergrösserter Ausschnitt des Details X aus der Figur 1 mit detaillierterer Darstellung der Sicherheitskupplung in eingekuppelter Position,
- Fig. 2b: ein vergrösserter Ausschnitt des Details X aus der Figur 1 mit detaillierterer Darstellung der Sicherheitskupplung in ausgekuppelter Position,
- Fig. 3: eine weitere und bevorzugte Ausführungsform einer Drehzahlüberlagerungseinrichtung mit einem Harmonic Drive Getriebe und mit einer Sicherheitskupplung gemäss der Erfindung, im Längsschnitt und dreidimensional dargestellt,
- Fig. 4: eine Detailansicht eines Beispiels für ein erstes Kupplungselementes als Federscheibe ausgebildet gemäss der Erfindung, in dreidimensionaler Darstellung dargestellt,
- Fig. 5: eine weitere Ansicht der Federscheibe entsprechend der Figur 4,
- Fig. 6: eine weitere Darstellung einer Federscheibe entsprechend den Figuren 4 und 5 mit daran angeordneten wellenartigen Sicken,
- Fig. 7: eine weitere besonders bevorzugten Ausführungsform einer Drehzahlüberlagerungseinrichtung mit einem Zykloidengetriebe und mit einer Sicherheitskupplung gemäss der Erfindung, im Längsschnitt und dreidimensional dargestellt.

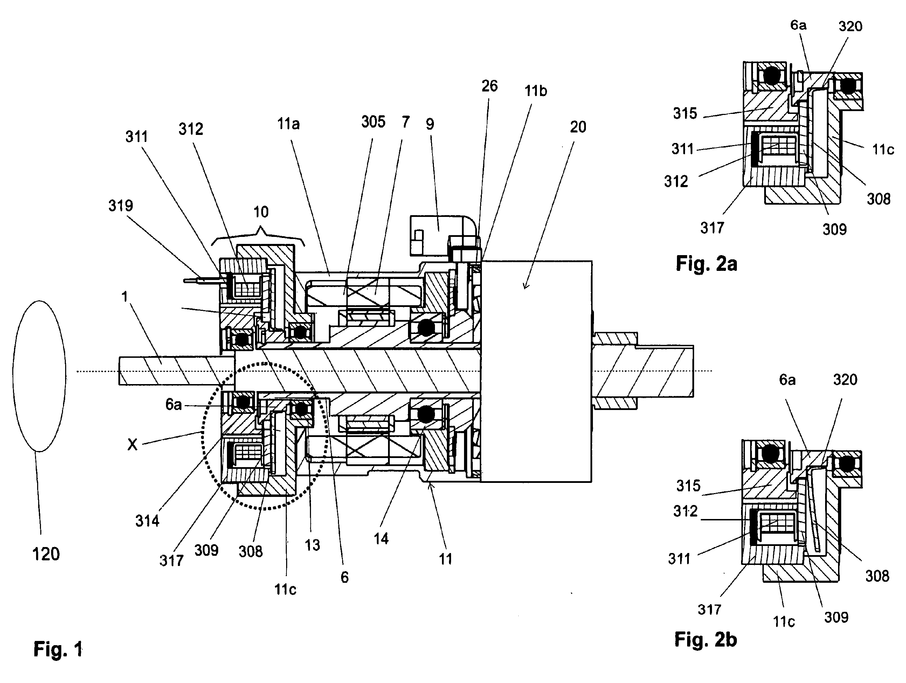

In Figur 1 ist schematisch und im Längsschnitt Drehzahlüberlagerungseinrichtung für ein Kraftfahrzeuglenksystem dargestellt kombiniert mit einer eine erfindungsgemässen Sicherheitskupplungsanordnung 10. Eine Drehzahlüberlagerungseinrichtung eines Kraftfahrzeuglenksystems umfassen eine Abtriebswelle 2, die zu einer Antriebswelle 1 in deren Achsrichtung ausgerichtet ist, eine Trägeranordnung 11, welche die Abtriebswelle 2 und die Antriebswelle 1 mindestens teilweise gelagert drehbar positioniert, einen Hilfsantrieb 6, 7 mit einem Rotor 6, der mit einem Getriebe 20 verbunden ist und eine einstellbare Verriegelungseinrichtung 10 zur wahlweisen drehfesten Kopplung zwischen Abtriebswelle 2 und Antriebswelle 1, wobei die Trägeranordnung 11 karosseriefest angeordnet ist. Der Rotor 6 des Hilfsantriebes 6, 7 umschliesst koaxial die Abtriebswelle 2 und/oder Antriebswelle 1. Ein Getriebe 20 mit einer Drehzahlübersetzung kleiner 1 überträgt die Drehzahl des Rotors 6 auf die Drehzahl der Abtriebswelle 2. Der Rotor 6 ist mit einem konzentrisch die Achsrichtung der Abtriebswelle 2 und Antriebswelle 1 umschliessenden ferromagnetischen oder permanentmagnetischen ersten Kontaktelement 308, das eine zentrale Öffnung 321 aufweist, drehfest verbunden, wobei die wahlweise drehfeste Kopplung zwischen Abtriebswelle 2 und Antriebswelle 1 durch einen Reibschluss des ersten Kontaktelementes 308 mit einem zweiten Kontaktelement 309 bewirkt ist, das drehfest mit der Trägeranordnung 11 verbunden ist. Die für die Reibkraft erforderliche Anpresskraft ist durch eine magnetische Kraft erzeugt, wobei das erste Kontaktelement 308 in Achsrichtung beweglich ist und durch diese Kraft bewegt wird. Das erste Kontaktelement 308 zur Darstellung der Bewegung ist als biegbare Federblechscheibe 308 ausgebildet, welche durch die magnetische Kraft in axialer Richtung verbogen werden kann bis dieses am zweiten Kontaktelement 309 anliegt und dann einen Reibschluss bildet wodurch der Kupplungsvorgang entsteht.

Mindestens eines der beiden Kontaktelemente 308, 309 kann vorzugsweise scheibenförmig ausgebildet sein und/oder aber auch konusförmig. Auch kann, vor allem das als Federblechscheibe 308 flächig ausgebildete erste Kontaktelement von einer planen Ebene abweichen und beispielsweise eine gewölbte und / oder wellige Form aufweisen. Die Federblechscheibe 308 ist derart ausgebildet, dass diese mit Hilfe eines Magnetfeldes, dessen magnetischer Fluss sich mindestens teilweise über das Federblechmaterial schliesst, auf Grund der magnetischen Krafteinwirkung eine Deformation auftritt, vorzugsweise in axialer Richtung 8, und sich dadurch die Federfläche sich in diese Richtung biegend bewegt und sich die Federoberfläche mindestens teilweise an ein zweites, feststehendes Kontaktelement 309 anlegen kann.

In einer bevorzugten Drehzahlüberlagerungseinrichtung liegen die Antriebswelle 1 und Abtriebswelle 2 in einer Achse 8 zueinander ausgerichtet. Die Antriebswelle 1 ist mit einem Lenkrad 120 verbunden.
In der gezeigten Ausführungsform ist auf dem Rotor 6 des Hilfsantriebes 305, 6, 7 ein Befestigungsbereich 6a vorgesehen, an dem die Federblechscheibe 308 fixiert ist derart, dass diese axial biegbar ist und dass diese das Drehmoment überträgt. Der koaxial die Antriebswelle 1 umschliessende Rotor 6 des Hilfsantriebes wird in Wälzlagern 13, 14 in der Trägeranordnung 11a, 11b, 11c, die hier als Gehäuse 11 ausgebildet ist, drehbar gelagert. Die Elemente der Verriegelungseinrichtung 10 können in einem separaten Teilgehäuse 317 als Baugruppe gefasst sein, die separat hergestellt werden kann und mechanisch mit der Trägeranordnung 11a, 11b, 11c verbunden wird, welches beispielsweise auch ein Lager 314 aufnimmt zur drehbaren Lagerung der Abtriebswelle 2 und / oder der Antriebswelle 1. Diese Verbindung kann dabei einfach über eine Verschraubung in ein hier nicht dargestelltes Innengewinde der Trägeranordnung 11 oder über Verschraubungen 26 hergestellt sein.

Im bevorzugten Fall ist der Hilfsantrieb 305, 6, 7 als Elektromotor ausgelegt, dessen Stator 7 fest mit der Trägeranordnung 11 verbunden ist. Je nach Ausführung des Getriebes 20 der Drehzahlüberlagerungseinrichtung umschliesst der Stator 7 die Achse 8 der Antriebswelle 1 und/oder Abtriebswelle 2 koaxial. Der Stator 7 trägt die Statorwindungen 305. Der Rotor des Elektromotors ist mit Permanentmagneten bestückt und wird bei entsprechender Bestromung der Statorwindungen 305 in Drehung versetzt. Der Elektromotor ist entsprechend vollständig in die Drehzahlüberlagerungseinrichtung integriert, wodurch eine sehr kompakte und energieeffiziente Auslegung erreicht ist. Der Motor ist so auszulegen, dass er in beide Drehrichtungen drehend angesteuert werden kann. Durch die Verbindung des Rotors mit einem Getriebeglied des Überlagerungsgetriebes 20, dessen Drehzahl mit einer Drehzahlübersetzung, die kleiner als 1 ist, auf die Abtriebswelle 1 übertragen wird, kann der Elektromotor mit höherer Drehzahl angesteuert werden. Übersetzungsverhältnisse von mehr als 1:20 oder gar mehr als 1:50 sind dabei besonders vorteilhaft. Das heisst mehr als 20 bzw. 50 Rotorumdrehung entsprechen 1 Umdrehung der Abtriebswelle, wenn die Drehzahl der Antriebswelle den Wert 0 hat. Die Drehzahlübersetzung wird entsprechend mit verschiedenen Getriebevarianten erzielt. Dabei kann sowohl ein Planetengetriebe, ein Zykloidengetriebe, ein Exzentergetriebe, ein Harmonic Drive Getriebe oder auch andere bekannte Getriebearten eingesetzt werden.

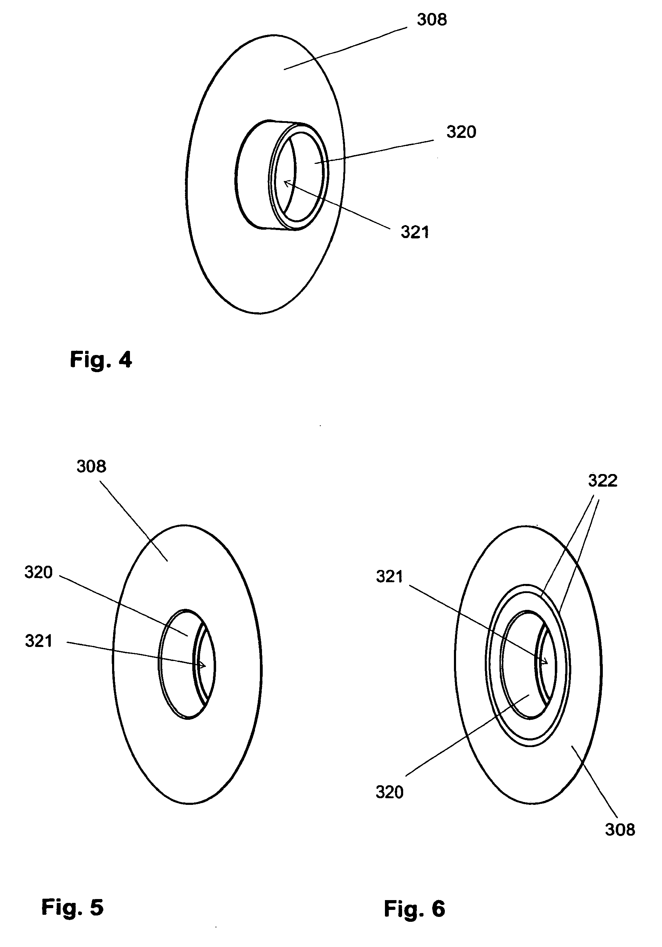

Die Kontaktelemente 308, 309 sind bevorzugt als kreisrunde Scheiben aus Stahl oder einem anderen ferromagnetischem Werkstoff hergestellt, wobei das erste Kontaktelemend, die Federblechscheibe aus federndem Material gefertigt ist. Es können aber auch unterbrochene bzw. gelochte Scheiben sein, was beispielsweise einer besseren Entlüftung beim Öffnen und Schliessen der beiden Kontaktscheiben dient. Im Ausführungsbeispiel ist die erste Kontaktscheibe 308 über ein Kopplungselement 6a mit dem Rotor 6 der Hilfskrafteinrichtung 305, 6, 7 drehfest aber in axialer Richtung verbiegbar verbunden. Das Federblech 308 kann mit einem Wellenteil 6a des Rotors 6 direkt verbunden werden oder über ein Zwischenstück. Das Federblech 308 weist im zentralen Bereich eine Kreisöffnung 321 auf durch welche die koaxiale Wellenanordnung der Antriebswelle 1 und / oder der Abtriebswelle 2 hindurch reicht, wobei mindestens die Stirnseite des Rotors 6 an den inneren Rand der Kreisöffnung 321 anschliesst oder ein Wellenteil des Rotors 6 durch diese Kreisöffnung 321 hindurch reicht, um dort befestigt werden zu können. Derartige bevorzugte Ausbildungen des ersten Kontaktelementes 308, ausgebildet als axial biegbare Federblechscheibe 308 sind in den Figuren 4 bis 6 als Beispiel dargestellt. Zur Erhöhung der Federelastizität bzw. der Beweglichkeit der Federblechscheibe 308, die vorzugsweise aus magnetischem oder magnetisierbarem Federstahl gefertigt ist, können zusätzlich mindestens eine sickenartige und / oder wellenartige Einformung in das Blech eingebracht werden. Vorzugsweise sind diese kreisrund und koaxial um die zentrale Öffnung 321 ausgebildet angeordnet, wie dies in der Figur 6 als Beispiel gezeigt ist. Die Befestigung der Federblechscheibe 308 am Rotor 6 bzw. am Befestigungsbereich 6a des Rotors erfolgt im Bereich der zentralen Kreisöffnung 321, derart dass der Hauptanteil der Fläche der Federblechscheibe 308 federnd verbiegbar bleibt. Als Befestigungsmittel kann beispielsweise ein Kragen 320 ausgebildet werden an der Kreisöffnung 321 welche direkt über Befestigungsbereich 6a des Rotors 6 gezogen wird oder indirekt über ein Zwischenstück verbunden wird. Es sind die bekannten Verbindungstechniken anwendbar, wie Verkrimpen, Verstemmen, Rändeln oder Rollieren mit anschließendem verpressen. Das Blech kann auch verlötet, verschweisst, verklebt oder mechanisch montiert werden. Mit Vorzug und in den Figuren als Beispiel dargestellt erfolgt die Verbindung über einen Presssitz.
Ohne Anlegen eines Magnetfeldes an die Federblechscheibe 308 oder bei kompensiertem Magnetfeld, derart dass keine Magnetkraft an der Federblechscheibe einwirkt, ist diese derart vorgeformt und am Rotor 6 mit Befestigungsmittel 320 befestigt, dass diese Federblechscheibe 308 von dem zweiten, feststehenden Kontaktelement 309 absteht und in dieser Position kein Reibschluss vorhanden ist, wie dies in der Figur 2b vergrössert dargestellt ist. In dieser Position ist keine Kupplungs bzw. Bremswirkung vorhanden.
Das zweite Kontaktelement 309 ist beispielsweise ebenfalls scheibenförmig ausgebildet und in geringem axialen Abstand gegenüber dem ersten mit dem Rotor 6 mit drehenden Kontaktelement 308 angeordnet, wie dies in den Figuren 1, 2a, 2b, 3, 7 gezeigt ist. Das zweite Kontaktelement 309 ist nicht drehend und chassisfest angeordnet und beispielsweise über ein Gehäusetragteil 315 mit Gehäuseteilen 11 c der chassisfesten Trägeranordnung 11 verbunden. Ein Permanentmagnet 312, vorzugsweise ringförmig ist im Wirkbereich der Federblechscheibe 308 vorgesehen. Dessen Magnetfeld schliesst sich mindestens teilweise über die Federblechscheibe 308 und erzeugt eine Kraftwirkung, derart dass sich die Federblechscheibe 308 mindestens teilweise an die Oberfläche des zweiten Kontaktelementes 309 anlegt. Dadurch wird die für die Reibkraft erforderliche Anpresskraft bereit gestellt und die Federblechscheibe 308a wird mit dem zweiten Kontaktelement 309 derart positioniert, dass für den Kupplungsvorgang notwendige Reibschluss entsteht.
Eine Anordnung mit einer Spule 312 im Wirkbereich des Permanentmagneten und mindestens dem ersten Kontaktelement 308 ermöglicht die Erzeugung eines Gegenmagnetfeldes durch entsprechende elektrische Ansteuerung im gewünschten Moment. Die magnetische Anpresskraft zwischen dem ersten 308 und dem zweiten Kontaktelement 309 kann durch diese elektrisch angesteuerte Gegenmagnetfeld wahlweise aufgehoben werden. Auf diese einfache Art und Weise kann der Kupplungsvorgang ein- und ausgeschaltet werden. Im normalen Fahrbetrieb ist die Spule 312, beispielsweise über einen elektrischen Anschluss 313, aktiviert und im Fehlerfall ausgeschaltet wodurch dann zwangsweise über das Magnetfeld des Permanentmagneten 311 eingekuppelt ist und damit die Drehzahlüberlagerungseinrichtung im Störfall ausser Betrieb gesetzt wird.
Es ist vorteilhaft wenn die Federkraft des axial beweglichen ersten Kontaktelements 308, der Federblechscheibe 308, derart bemessen ist, dass die von dem anderen Kontaktelement 309 weg gerichtet wirkende Kraft im vom ersten Kontaktelement 308 abgehobenen Zustand im Bereich von etwas grösser als Null bis 10% des Betrages der magnetischen Kraft des Magnetfeldes, das die Anpresskraft erzeugt, liegt.

Wie bereits erwähnt, wird magnetische Anpresskraft im einfachsten Fall durch einen Permanentmagnet 311 erzeugt. Dabei kann der Permanentmagnet 311 als zylindrische Scheibe, deren Achse mit der Achse 8 der Antriebswelle 1 bzw. Abtriebswelle 2 zusammenfällt, ausgebildet sein. Es können aber auch mehrere einzelne Permanentmagnete auf eine zylindrische Scheibe aufgebracht sein. Im weiteren wird jede mögliche Ausführungsform der Einfachheit halber mit dem Permanentmagneten 311 bezeichnet.

Das erste Kontaktelement 308 ist durch das Magnetfeld eines Permanentmagneten 311 an das zweite Kontaktelement 309 herangezogen. Das Teilgehäuse 317 und / oder eine entsprechende Ankerausbildung sorgen für den magnetischen Schluss. Die Flächenpressung zwischen den beiden Kontaktelementen 308, 309 dient als Reibschluss. Zur Verbesserung der Reibkraft können eine oder beide der Kontaktelemente 308, 309 mit entsprechenden Reibbelägen beschichtet sein. Eine formschlüssige Oberflächenstruktur der beiden Kontaktelemente 308, 309 wäre zwar naheliegend und denkbar, birgt aber eine Reihe von Nachteilen mit sich. Insbesondere ist dann eine Verriegelung nicht mehr für jeden Relativdrehwinkel zwischen den beiden Kontaktelementen 308, 309 möglich. Auch ist von erhöhtem Verschleiss auszugehen. Insbesondere ist ein Abbremsen einer allfällig noch bestehenden Drehung des Rotors 6 kaum möglich. Dennoch kann eine derartige Lösung im Einzelfall wünschenswert sein.

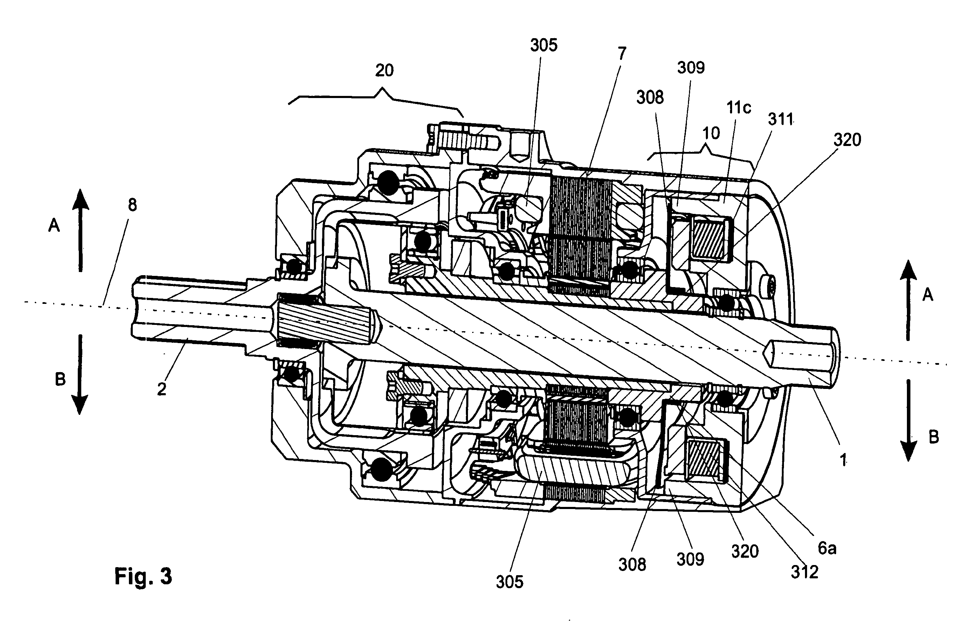

Im Fall der Verriegelung sind die Kontaktelemente 308, 309 miteinander in Reibkontakt, wodurch der Rotor 6 gegenüber der Trägerstruktur 11 blockiert ist. Dies ist beispielhaft in der Figur 2a und im oberen Teil der Figur 3, der Teil, der in der Zeichnung die Pfeile mit der Kennzeichnung A bezeichnet ist, dargestellt. Der Rotor 6 ist dann in dieser Kupplungsposition weiter mit einem ersten Getriebeelement des Getriebes 20 verbunden, der damit ebenfalls gegenüber der drehfest bezüglich der Karosserie angeordneten Trägerstruktur 11 blockiert ist. Somit wird das gesamte Drehmoment, das in die Antriebswelle 1 eingeleitet wird, auf die Abtriebswelle 2 übertragen. Entsprechend wird dabei die Drehzahl der Antriebswelle auf eine Drehzahl an der Abtriebswelle übertragen. Damit ist die Funktion der drehfesten Kopplung zwischen Antriebswelle 1 und Abtriebswelle 2 erzielt. Dieser Fall ist für den Notfall oder auch bei ausgeschaltetem Antriebsmotor des Kraftfahrzeuges wichtig. In diesem Betriebszustand hat der Fahrer die alleinige Kontrolle über die Steuerung der Fahrtrichtung und das Steuerrad ist mit den verschwenkten Rädern mechanisch miteinander gekoppelt. Das ist wichtig, in Fällen mangelnder Energieversorgung des Hilfsantriebes, wie etwa bei Stromausfall, oder auch bei Fehlfunktion der Ansteuerung des Hilfsantriebes. Zur Detektion derartiger Fehlfunktionen können beispielsweise Sensoren 9 in die Drehzahlüberlagerungseinrichtung integriert sein, die eine Überwachung der verschiedenen Drehzahlen bzw. Drehwinkeln an Antriebswelle 1, Abtriebswelle 2 und Rotor 6 ermöglicht.

Im Fall der Entriegelung bzw. des Auskuppelns, bei dem die Drehzahlen bzw. Drehwinkel Antriebswelle 1 und Abtriebswelle 2 zueinander veränderbar sein sollen, werden die Kontaktelemente 308, 309, bevorzugt durch einen kleinen Abstand zueinander, ausser Reibkontakt gebracht. Dies ist beispielhaft in der Figur 2b und im unteren Teil der Figur 3, der Teil, der in der Zeichnung die Pfeile mit der Kennzeichnung B bezeichnet ist, dargestellt. Gleichzeitig wird der Hilfsantrieb mit Energie versorgt, so dass er die Abstützung des von der Antriebswelle 1 eingeleiteten Drehmoments übernimmt. Bedarfsweise wird der Rotor 6 durch den Hilfsantrieb in Drehung versetzt, um die Entsprechende Drehzahl- bzw. Drehwinkelüberlagerung zwischen Antriebswelle 1 und Abtriebswelle 2 zu erreichen.

Es ist besonders vorteilhaft zur Erhöhung der Sicherheit, wenn im Fall der Entriegelung bei Ausfall der Energieversorgung am Hilfsantrieb 305, 6, 7 die Umschaltung in den Fall der Verriegelung, bei dem Abtriebswelle 2 und Antriebswelle 1 drehfest gekoppelt sind, quasi automatisch erfolgt. Zusätzliche Ströme, die die Kopplung bewirken, sollen nicht erforderlich sein. Dieser Vorgang soll zudem für den Fahrer möglichst unmerklich erfolgen.

Dazu soll bevorzugt die Entriegelung durch einen Stromfluss bewirkt werden, während ohne diesen Stromfluss sich das System automatisch verriegelt. In einer Weiterführung der Erfindung wird das dadurch erreicht, dass die magnetische Anpresskraft zwischen der ersten und zweiten Kontaktelement durch ein elektrisch angesteuertes Gegenmagnetfeld aufhebbar ist. Im einfachsten Fall wird dieses Gegenmagnetfeld durch eine umlaufende Spule 312, die über einen elektrischen Anschluss 313 angesteuert wird, erzeugt. Die Spule 312 ist im Ausführungsbeispiel zwischen dem Permanentmagneten 311, die die magnetische Anpresskraft bewirken und der Kontaktscheibe 309 angeordnet. Ist die Spule 312 entsprechend bestromt, schliesst sich der magnetische Kreis zwischen dem Permanentmagneten 311, so dass auf die erste Kontaktscheibe 308 keine oder nur eine sehr geringe Anziehungskraft in Richtung der zweiten Kontaktscheibe 309 wirkt. Damit sinkt die Reibkraft zwischen den beiden Kontaktscheiben, so dass die Verriegelungseinrichtung 10 entriegelt ist. Ein grosser Vorteil ist dabei, dass nach Erreichen eines Abstandes zwischen den beiden Kontaktscheiben 308, 309 das Gegenmagnetfeld und entsprechend der in der Spule 312 mit, im Vergleich zur unmittelbaren Durchführung der Trennung, nur geringeren Werten aufrecht erhalten bleiben muss, um die Entkopplung der Kupplung aufrecht zu erhalten. Dadurch ist der Energiebedarf zum Halten des geöffneten Zustandes der Kupplung sehr gering. Bei Ausfall der Stromversorgung der Spule 312 bricht das Gegenmagnetfeld unmittelbar zusammen, so dass die Magnetkraft des Permanentmagneten 311 direkt auf die Kontaktscheibe 308 wirkt und diese an die Kontaktscheibe 309 heranzieht.

Die Verriegelungseinrichtung 10 kann sehr gut und kompakt in die beschriebene Drehzahlüberlagerungseinrichtung integriert werden. Dazu wird bevorzugt der Rotor 6 einerseits direkt in der Trägeranordnung 11 drehbar gelagert und die Antriebswelle 1 in dem fest mit der Trägeranordnung verbundenen Teil der Verriegelungseinrichtung 10, welches das zweite Kontaktelement 309 umfasst, drehbar gelagert. Besonders vorteilhaft ist das andere Ende der Antriebswelle 1 in direkt in der Abtriebswelle 2 gelagert.

Obwohl als Getriebe 20 verschieden Getriebearten eingesetzt werden können, hat es sich herausgestellt, dass nicht alle Getriebearten gleich gut geeignet sind für den Einsatz in einer Drehzahlüberlagerungseinrichtung kombiniert mit der erfindungsgemässen Sicherheitskupplung. Eine bevorzugte Ausbildung einer Drehzahlüberlagerungseinrichtung kombiniert mit der erfindungsgemässen Sicherheitskupplung besteht in der Verwendung eines Harmonic Drive Getriebes 20 als Reduktionsgetriebe, wie dies in der Figur 3 schematisch und beispielsweise dargestellt ist. Im oberen Teil des Längsschnittes ist der eingekuppelte Zustand mit anliegender Federblechscheibe 308 gezeigt und im unteren Teil der ausgekuppelte Zustand mit abgespreizter Federblechscheibe 308. Diese Kombination ermöglicht die Realisation einer kompakten und wirkungsvollen Anordung.

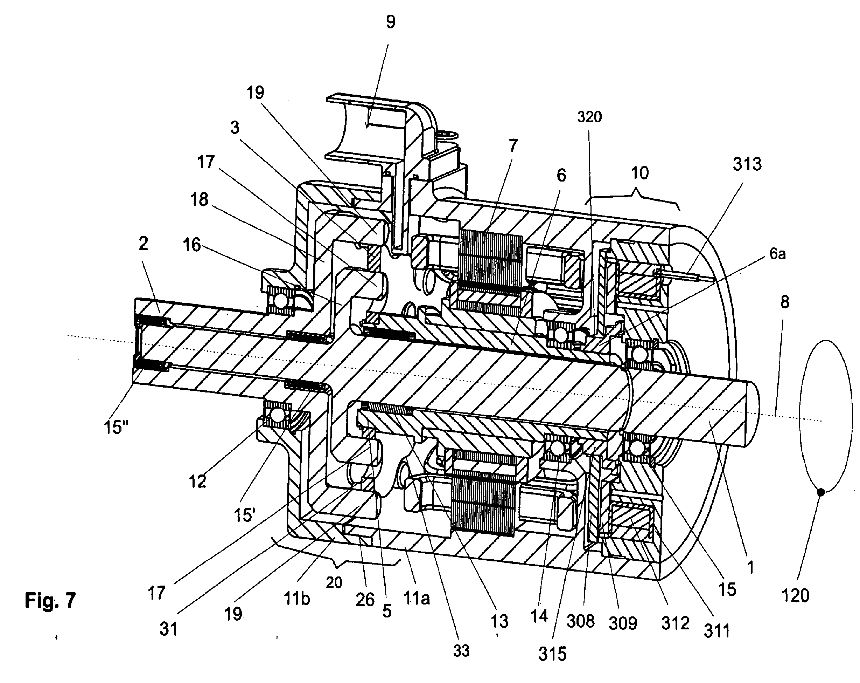

Eine besonders bevorzugte und geeignete Kombination mit der erfindungsgemässen Sicherheitskupplung wird erzielt durch den Einsatz eines Zykloidengetriebes bzw. eines Kurvenscheibengetriebes 20 in der Drehzahlüberlagerungseinrichtung, wie dies schematisch und beispielsweise in der Figur 7 dargestellt ist.
Eine derartige Überlagerungseinrichtung weist eine Antriebswelle 1, die direkt oder indirekt vom Steuerrad 120 angetrieben wird, eine Abtriebswelle 2, die direkt oder indirekt die Spurstangen antreibt, eine Trägeranordnung 11, einen Hilfsantrieb, bevorzugt ein Elektromotor 6, 7, und ein Kurvenscheibengetriebe 3, 5, 16, 17, 18, 19 auf, welches zwischen dem Elektromotor und der Abtriebswelle angeordnet ist.
Die Drehzahlüberlagerungseinrichtung, wie in der Figur 7 gezeigt umfasst folgende Komponenten:
- eine Antriebseinrichtung, hier die Antriebswelle 1, mit einer Drehachse 8;
- eine Abtriebseinrichtung, hier die Abtriebswelle 2, mit einer Drehachse 8;
- einen Hilfsantrieb als koaxial angeordneten Elektromotor mit einem Stator 7 der einen Rotor 6, mit einer Drehachse 8, antreibt;
- einer karosseriefesten Trägeranordnung, vorteilhaft als Gehäuse 11 ausgebildet, wie beispielsweise bestehend aus den mindestens zwei Gehäuseteilen 11 a und 11 b, die die Wellen 1, 2 und den Rotor 6 des Hilfsantriebs in den Lagern 12, 15, 15', 15" bzw. 13, 14, wobei diese Gehäuseteile vorzugsweise mit einem Gewinde 26 verschraubbar sind;
- mindestens eine um die Längsachse 8 exzentrisch rotierbar angeordnete Kurvenscheibe 3 mit einer wellenartigen Aussenkontur 33, wobei die mindestens eine Kurvenscheibe 3 eine kreisrunde, koaxial angeordnete Zentralöffnung im Zentrum aufweist und, wobei auf einem konzentrischen Teilkreis der Scheiben, der zwischen der Zentralöffnung und der Aussenkontur liegt, sind mindestens zwei Bohrungen 31, vorgesehen sind;
- einen ersten Träger 16, drehfest angeordnet an der Antriebswelle 1, dessen Achse in der Längsachse 8 liegt und um diese rotierbar ist, wobei an dem ersten Träger 16 in paralleler Richtung zur Längsachse 8 Mitnehmerbolzen 17 angeordnet sind, welche in die Bohrungen 31 der Kurvenscheibe 3 eingreifen und an dessen Innenflächen abwälzen bzw. abgleiten;
- einen zweiten Träger 18 angeordnet an einer zweiten Welle 2, die als Abtriebswelle 2 ausgebildet ist und dessen Achse in der Längsachse 8 liegt und um diese rotierbar ist, wobei an dem zweiten Träger 18 in paralleler Richtung zur Längsachse 8 radial beabstandet auf einem konzentrisch zur Längsachse liegenden Teilkreis Aussenbolzen 19 angeordnet sind, an denen sich die wellenförmige Aussenkontur 33 der mindestens einen Kurvenscheibe 3 durch die exzentrische radial taumelnde Bewegung abwälzt;
wobei der Rotor 6 koaxial drehbar um die Antriebswelle 1 und die gemeinsame Längsachse 8 gelagert angeordnet und der Rotor 6 für jede Kurvenscheibe einen dieser zugeordneten Exzenter 5 mit einer Exzentrizität gegenüber der Längsachse 8 trägt und der Exzenter in die Zentralöffnung der zugeordneten Kurvenscheibe 3 eingreift, um eine um die Längsachse 8 rotierenden lateral taumelnden Bewegung der zugeordneten mindestens einen Kurvenscheibe 3 zu bewirken, wobei die Antriebs- und die Abtriebswelle 1, 2 vorzugsweise in einer einzigen Längsachse mit einem Drehzentrum 8 angeordnet sind.
Das Kurvenscheibengetriebe kann mit einer einzelnen Kurvenscheibe 3 öder aber auch mit mehreren Kurvenscheiben 3 ausgebildet werden. Die Ausführung mit zwei Kurvenscheiben wird bevorzugt, da hierbei eine genügend starke Verminderung der Laufgeräusche auch bei noch einfacher Realisierung erreicht werden kann. In der Figur 7 ist beispielsweise eine Ausführung mit nur einer Kurvenscheibe 3 im Längsschnitt dargestellt. Die Sicherheitskupplung 10 gemäss vorliegender Erfindung ist, wie zuvor beschrieben, mit einem Teilgehäuse 317 an das Gehäuse 11 der Drehzahlüberlagerungseinrichtung angekoppelt und der Rotor 6 mit der biegbaren Federblechscheibe 308 verbunden.

Mit Hilfe der nach den oben genannten Merkmalen aufgebauten Drehzahlüberlagerungseinrichtung ist eine Drehzahlüberlagerungseinrichtung mit einer Sicherheitsredundanz für die Lenkung gegen Ausfall der Bordnetzspannung oder andere Störungen gegeben, oder bei Einleitung einer Sonderfunktion, die sehr schnell und sicher eine mechanische Kopplung zwischen dem Steuerrad und den gelenkten Rädern herstellt. Im Falle eines Ausfalls der Energieversorgung des Hilfsantriebes 305, 6, 7 oder einer anderen Störung der Funktionen des Fahrzeuges wird der Stromfluss zum Betreiben des Gegenmagnetfeldes zum Aufheben der magnetischen Anpresskraft unterbrochen, so dass die Federblechscheibe 308 mit dem zweiten Kontaktelement 309 mit der permanentmagnetisch erzeugten Anpresskraft in reibschlüssigen Kontakt stehen.
Als Sonderfunktion ist beispielsweise das automatische Einparken zu verstehen. Es sind aber auch andere Sonderfunktionen denkbar und möglich, für die ein schnelles Einkoppeln der Kupplung gegeben sein soll. Beispiele hierfür können auch bestimmte Regelzustände, die bei Überhitzung von elektronischen Bauelementen der Steuerung, bei Überschreiten und/oder Unterschreiten von Fahrgeschwindigkeitsgrenzen, bei Über- und/oder Unterschreiten von Grenzen der Drehwinkelgeschwindigkeit am Steuerrad und vieles mehr sein.

## Patentansprüche

1. Drehzahlüberlagerungseinrichtung eines Kraftfahrzeuglenksystems mit einer Abtriebswelle (2), die zu einer Antriebswelle (1) in deren Achsrichtung ausgerichtet ist, einer Trägeranordnung (11), welche die Abtriebswelle (2) und die Antriebswelle (1) mindestens teilweise gelagert drehbar positioniert, einem Hilfsantrieb (6, 7) mit einem Rotor (6), der mit einem Getriebe (20) verbunden ist und eine einstellbare Verriegelungseinrichtung (10) zur wahlweisen drehfesten Kopplung zwischen Abtriebswelle (2) und Antriebswelle (1), wobei die Trägeranordnung (11) karosseriefest angeordnet ist, der Rotor (6) des Hilfsantriebes (6, 7) koaxial die Abtriebswelle (2) und/oder Antriebswelle (1) umschliesst, das Getriebe (20) mit einer Drehzahlübersetzung kleiner 1 die Drehzahl des Rotors (6) auf die Drehzahl der Abtriebswelle (2) überträgt, und der Rotor (6) mit einem konzentrisch die Achsrichtung der Abtriebswelle (2) und Antriebswelle (1) umschliessenden ferromagnetischen oder permanentmagnetischen ersten Kontaktelement (308) mit einer zentralen Öffnung (321) drehfest verbunden ist, wobei die wahlweise drehfeste Kopplung zwischen Abtriebswelle (2) und Antriebswelle (1) durch einen Reibschluss des ersten Kontaktelementes (308) mit einem zweiten Kontaktelement (309) besteht, das drehfest mit der Trägeranordnung (11) verbunden ist, und die für die Reibkraft erforderliche Anpresskraft durch eine magnetische Kraft erzeugbar ist, wobei das erste Kontaktelement (308) in Achsrichtung beweglich ist, **dadurch gekennzeichnet, dass** das erste Kontaktelement (308) als durch die magnetische Kraft biegbare Federblechscheibe (308) ausgebildet ist, wobei die Federblechscheibe (308) derart vorgeformt und am Rotor (6) mit Befestigungsmittel (320) befestigt ist, dass diese Federblechscheibe (308) vom zweiten feststehenden Kontaktelement (309) absteht und in dieser Position kein Reibschluss vorhanden ist.

2. Drehzahlüberlagerungseinrichtung nach Anspruch 1, dadurch gekemizeichnet, dass die Federblechscheibe (308) eine zentrale Öffnung (321) durch die der Rotor (6) und/oder ein Befestigungsbereich (6a) des Rotors (6) durchführbar ist, und ein Befestigungsmittel (320) zur Befestigung der Federblechscheibe (308) mit dem Rotor (6) und/oder dem Befestigungsbereich (6a) des Rotors (6) aufweist.

3. Drehzahlüberlagerungseinrichtung nach Anspruch 2, **dadurch gekennzeichnet, dass** das Befestigungsmittel (320) als Kragen und die Verbindung als Längspressverband zwischen Kragen und Rotor (6) und/oder Befestigungsbereich (6a) des Rotors ausgebildet ist.

4. Drehzahlüberlagerungseinrichtung nach einem der vorhergehenden Ansprüche, **dadurch gekennzeichnet, dass** die Federblechscheibe (308) mindestens eine sickenartige und / oder wellenartige Einformung aufweist, die vorzugsweise kreisrund und koaxial angeordnet ist und um die zentrale Öffnung (321) ausgebildet ist und die Beweglichkeit der Federblechscheibe (308) erhöhen.

5. Drehzahlüberlagerungseinrichtung nach einem der vorhergehenden Ansprüche, **dadurch gekennzeichnet, dass** die Federblechscheibe (308) ohne eine Magnetkraft von dem zweiten, feststehenden Kontaktelement (309), absteht und in dieser Position kein Reibschluss vorhanden ist.

6. Drehzahlüberlagerungseinrichtung nach einem der vorhergehenden Ansprüche, **dadurch gekennzeichnet, dass** ein Permanentmagnet (311) im Bereich der Federblechscheibe (308) vorgesehen ist, dessen Magnetfeld die für die Reibkraft erforderliche Anpresskraft bereit stellt und die Federscheibe (308) im Reibschluss mit dem zweiten Kontaktelement (309) positioniert.

7. Drehzahlüberlagerungseinrichtung nach einem der vorhergehenden Ansprüche, **dadurch gekennzeichnet, dass** eine Spule (312) vorgesehen ist, die die magnetische Anpresskraft zwischen dem ersten (308) und zweiten Kontaktelement (309) durch ein elektrisch angesteuertes Gegerimagnetfeld aufhebt.

8. Drehzahlüberlagerungseinrichtung nach einem der vorhergehenden Ansprüche **dadurch gekennzeichnet, dass** die Federkraft des axial beweglichen ersten Kontaktelements (308), der Federblechscheibe (308) derart bemessen ist, dass die von dem anderen Kontaktelement (309) weg gerichtet wirkende Kraft im vom ersten Kontaktelement (308) abgehobenen Zustand im Bereich von etwas grösser als Null bis 10% des Betrages der magnetischen Kraft des Magnetfeldes, das die Anpresskraft erzeugt, liegt.

9. Drehzahlüberlagerungseinrichtung nach einem der vorhergehenden Ansprüche, **dadurch gekennzeichnet, dass** der Hilfsantrieb (6, 7) ein Elektromotor ist, dessen Stator (7) fest mit der Trägeranordnung (11) verbunden ist.

10. Drehzahlüberlagerungseinrichtung nach Anspruch 9, **dadurch gekennzeichnet, dass** der Stator (7) die Achse (8) der Antriebswelle (1) und/oder Abtriebswelle (2) koaxial umschliesst.

11. Verfahren zum Betreiben einer Drehzahlüberlagerungseinrichtung eines Fahrzeuglenksystems nach einem der vorhergehenden 1 bis 10, **dadurch gekennzeichnet, dass** im Falle eines Ausfalls der Energieversorgung des Hilfsantriebes oder einer anderen Störung der Funktionen des Fahrzeuges oder bei Einleitung einer Sonderfunktion der Stromfluss zum Betreiben des Gegenmagnetfeldes zum Aufheben der magnetischen Anpresskraft unterbrochen wird, so dass das erste Kontaktelement (308) mit dem zweiten Kontaktelement (309) mit der magnetisch erzeugten Anpresskraft in reibschlüssigen Kontakt gebracht wird.

## Claims

1. Rotational speed superposition device for a motor vehicle steering system having an output shaft (2), which with respect to a drive shaft (1) is oriented in its axial direction, a support arrangement (11), which rotatably positions the output shaft (2) and the drive shaft (1) so as to be at least partially supported, an auxiliary drive (6, 7) with a rotor (6), which is connected to a gear (20) and an adjustable locking mechanism (10) for optional non-rotatable coupling between output shaft (2) and drive shaft (1), wherein the support arrangement (11) is disposed stationarily on the vehicle body, the rotor (6) of the auxiliary drive (6, 7) coaxially encompasses the output shaft (2) and/or the drive shaft (1), the gear (20) translates the rotational speed of the rotor (6) to the rotational speed of the output shaft (2) at a rotational speed translation less than one, and the rotor (6) is non-rotatably connected to a ferromagnetic or permanent magnetic first contact element (308) concentrically encompassing the axial direction of the output shaft (2) and drive shaft (1) and having a central opening (321), wherein the optionally non-rotatable coupling between output shaft (2) and drive shaft (1) exists due to a frictional contact of the first contact element (308) with a second contact element (309), which is non-rotatably connected to the support arrangement (11), and the contact force required for the frictional force can be generated by a magnetic force, wherein the first contact element (308) can be moved in the axial direction, **characterised in that** the first contact element (308) is constructed as a spring sheet metal disc (308) which can be bent by the magnetic force, wherein the spring sheet metal disc (308) is pre-shaped and secured to the rotor (6) with securing means (320) in such a way that this spring sheet metal disc (308) protrudes from the second fixed contact element (309) and there is no frictional contact in this position.

2. Rotational speed superposition device according to claim 1, **characterised in that** the spring sheet metal disc (308) has a central opening (321) through which the rotor (6) and/or a securing region (6a) of the rotor (6) can be passed, and a securing means (320) for securing the spring sheet metal disc (308) to the rotor (6) and/or the securing region (6a) of the rotor (6).

3. Rotational speed superposition device according to claim 2, **characterised in that** the securing means (320) is designed as a collar and the connection is designed as a force fit between collar and rotor (6) and/or securing region (6a) of the rotor.

4. Rotational speed superposition device according to any one of the preceding claims, **characterised in that** the spring sheet metal disc (308) has at least one bead-like and/or wave-like moulded part which is preferably circular and coaxially arranged and is constructed around the central opening (321) and increases the movement of the spring sheet metal disc (308).

5. Rotational speed superposition device according to any one of the preceding claims, **characterised in that** the spring sheet metal disc (308) protrudes from the second, fixed contact element (309) without a magnetic force and there is no frictional contact in this position.

6. Rotational speed superposition device according to any one of the preceding claims, **characterised in that** a permanent magnet (311) is provided in the region of the spring sheet metal disc (308), the magnetic field of which provides the contact force required for the frictional force and positions the spring disc (308) in frictional contact with the second contact element (309).

7. Rotational speed superposition device according to any one of the preceding claims, **characterised in that** a coil (312) is provided which cancels the magnetic contact force between the first (308) and second contact element (309) by way of an electrically activated opposing magnetic field.

8. Rotational speed superposition device according to any one of the preceding claims, **characterised in that** the spring force of the axially movable first contact element (308), the spring sheet metal disc (308), is of such a size that the force acting in the direction away from the other contact element (309) when raised from the first contact element (308) is in the region of slightly greater than zero to 10% of the amount of the magnetic force of the magnetic field which generates the contact force.

9. Rotational speed superposition device according to any one of the preceding claims, **characterised in that** the auxiliary drive (6, 7) is an electric motor whose stator (7) is tightly connected to the support arrangement (11).

10. Rotational speed superposition device according to claim 9, **characterised in that** the stator (7) coaxially encompasses the axle (8) of the drive shaft (1) and/or output shaft (2).

11. Method for operating a rotational speed superposition device for a vehicle steering system according to any one of the preceding claims 1 to 10, **characterised in that** in the event of failure of the power supply of the auxiliary drive or another disruption to the functions of the vehicle or when a special function is initiated, the current flow for operating the opposing magnetic field to cancel the magnetic contact force is interrupted, so the first contact element (308) is brought into frictional contact with the second contact element (309) with the magnetically generated contact force.

## Revendications

1. Dispositif de superposition de vitesses de rotation d'un système de direction de véhicule automobile, comportant un arbre de sortie (2) orienté vers l'arbre d'entrée (1) dans sa direction axiale, un dispositif support (11) positionnant l'arbre de sortie (1) et l'arbre d'entrée (2) au moins partiellement logés rotatifs, un entraînement auxiliaire (6, 7) pourvu d'un rotor (6) qui est connecté à une transmission par engrenages (20) et un dispositif de verrouillage (10) réglable destiné au couplage bloqué en rotation, au choix, entre l'arbre de sortie (2) et l'arbre d'entrée (1), auquel cas le dispositif support (11) est agencé fixe par rapport à la carrosserie ; le rotor (6) de l'entraînement auxiliaire (6, 7) entoure l'arbre de sortie (1) et/ou l'arbre d'entrée (2) de façon coaxiale ; la transmission par engrenages (20) transmet la vitesse de rotation du rotor (6) à la vitesse de rotation de l'arbre de sortie (2) avec un rapport inférieur à 1 ; et le rotor (6) est relié de façon bloquée en rotation à un premier élément de contact (308) ferromagnétique ou à aimantation permanente pourvu d'une ouverture centrale (321) entourant concentriquement la direction axiale de l'arbre de sortie (2) et de l'arbre d'entrée (1), auquel cas le couplage bloqué en rotation, au choix, entre l'arbre de sortie (2) et l'arbre d'entrée (1) a lieu à travers une liaison par friction du premier élément de contact (308) avec le deuxième élément de contact (309) qui est relié bloqué en rotation avec le dispositif support (11) et la force de pression, nécessaire pour la force de friction, est produite par une force magnétique, auquel cas le premier élément de contact (308) est mobile en direction axiale, **caractérisé en ce que** le premier élément de contact (308) est formé en tant que disque en tôle souple (308) ployable par la force magnétique, auquel cas le disque en tôle souple (308) est de telle sorte préformé et est fixé au rotor (6) à l'aide de moyens de fixation que ce disque en tôle souple (308) est éloigné du deuxième élément de contact (309) stationnaire et qu'aucune liaison par friction n'existe dans cette position.

2. Dispositif de superposition de vitesses de rotation selon la revendication 1, **caractérisé en ce que** le disque en tôle souple (308) présente une ouverture centrale (321) à travers laquelle le rotor et/ou une partie de fixation (6a) du rotor (6) peuvent être acheminés, et présente un moyen de fixation (320) destiné à fixer le disque en tôle souple (308) au rotor (6) et/ou à la partie de fixation (6a) du rotor (6).

3. Dispositif de superposition de vitesses de rotation selon la revendication 2, **caractérisé en ce que** le moyen de fixation (320) est formé en tant que collet et que le raccordement est formé en tant qu'ajustement serré longitudinal entre le collet et le rotor (6) et/ou la partie de fixation (6a) du rotor (6).

4. Dispositif de superposition de vitesses de rotation selon une des revendications précédentes, **caractérisé en ce que** le disque en tôle souple (308) présente au moins une mise en forme de type pliée et/ou ondulée qui est de préférence agencée circulaire ou coaxiale et qui est formée autour de l'ouverture centrale (321) augmentant ainsi la mobilité du disque en tôle souple (308).

5. Dispositif de superposition de vitesses de rotation selon une des revendications précédentes, **caractérisé en ce que** le disque en tôle souple (308) est éloigné du deuxième élément de contact (309) stationnaire sans aucune force magnétique et que dans cette position aucune liaison par friction n'existe.

6. Dispositif de superposition de vitesses de rotation selon une des revendications précédentes, **caractérisé en ce qu'**un aimant permanent (311) est prévu dans la zone du disque en tôle souple (308) dont le champ magnétique met à disposition la force de pression nécessaire pour la force de friction et positionne le disque en tôle souple (308) en liaison par friction avec le deuxième élément de contact (309).

7. Dispositif de superposition de vitesses de rotation selon une des revendications précédentes, **caractérisé en ce que** l'on prévoit une bobine (312) qui annule la force de pression entre le premier (308) et le deuxième élément de contact (309) à l'aide d'un champ magnétique antagoniste commandé électriquement.

8. Dispositif de superposition de vitesses de rotation selon une des revendications précédentes, **caractérisé en ce que** la force du ressort du premier élément de contact (308) axialement mobile du disque en tôle souple (308) est mesurée de telle sorte que la force agissant dirigée à l'opposé de l'autre élément de contact (309) dans un état retiré du premier élément de contact (308) se situe dans une zone allant d'un peu plus de zéro à 10% du montant de la force magnétique du champ magnétique qui produit la force de pression.

9. Dispositif de superposition de vitesses de rotation selon une des revendications précédentes, **caractérisé en ce que** l'entraînement auxiliaire (6, 7) est un moteur électrique, dont le stator (7) est relié fermement avec le dispositif support (11).

10. Dispositif de superposition de vitesses de rotation selon la revendication 9, **caractérisé en ce que** le stator (7) entoure coaxialement l'axe (8) de l'arbre d'entrée (1) et/ou de l'arbre de sortie (2).

11. Procédé destiné à actionner un dispositif de superposition de vitesses de rotation d'un système de direction de véhicule automobile selon une des revendications de 1 à 10, **caractérisé en ce que** lors d'une panne de fourniture d'énergie du dispositif de support ou lors d'un autre dysfonctionnement des fonctions du véhicule ou lors de l'introduction d'une fonction spécialisée, le passage du courant électrique nécessaire à l'actionnement du champ magnétique antagoniste dans le but d'annuler la force de pression est interrompu de sorte que le premier élément de contact (308) est porté en contact de friction avec le deuxième élément de contact (309) à l'aide de la force de pression produite magnétiquement.
